# DEMANDE DE BREVET EUROPEEN

(11) **EP 2 634 029 A1**
(43) Date de publication de la demande: **04.09.2013**
(21) Numéro de dépôt: 13155560.9
(22) Date de dépôt: 18.02.2013
(51) Int. Cl.: B60K 6/12, F02B 21/00

(54) **Système hybride comprenant un système de stockage d'énergie pneumatique et équipant un véhicule automobile**

(30) Priorité: 02.03.2012 FR 1251918
(71) Demandeur: PEUGEOT CITROËN AUTOMOBILES SA, 78140 Velizy-Villacoublay (FR)
(72) Inventeur: Grise, Clement, 92270 Bois Colombes (FR); Le Lievre, Armel, 78360 Montesson (FR)

(57) **Abrégé**

L'invention a pour objet un système hybride (1) destiné à équiper un véhicule automobile. Le système hybride (1) comprend un système de stockage d'énergie pneumatique (4) qui comprend au moins un réservoir de démarrage (8) et un réservoir principal (9). Le réservoir de démarrage (8) et le réservoir principal (9) sont montés en série l'un avec l'autre.

## Description

L'invention relève du domaine des agencements ou montages de plusieurs moteurs primaires différents pour une propulsion réciproque ou commune d'un véhicule automobile. Elle a pour objet un système hydride comprenant un système de stockage d'énergie pneumatique. Elle a aussi pour objet un procédé pour la mise en oeuvre d'un tel système hybride.

Un véhicule automobile est susceptible d'être équipé d'un système hybride pour pourvoir à son déplacement. Le système hybride comprend un moteur thermique et un système de stockage d'énergie pneumatique. Le système de stockage d'énergie pneumatique est utilisé pour délivrer une énergie complémentaire à celle délivrée par le moteur thermique. Le moteur thermique convertit l'énergie cinétique du véhicule automobile en air comprimé qui est stocké à l'intérieur d'un réservoir d'air constitutif du système de stockage d'énergie pneumatique. Lorsque de besoin, l'énergie pneumatique stockée est convertie en énergie mécanique qui est transmise à un train de roues du véhicule automobile, ce qui provoque ou participe du déplacement du véhicule.

On connaît par le document EP 1,470,014 (Shep Limited) un dispositif de stockage d'énergie hydraulique destiné à équiper un véhicule automobile. Ledit dispositif comprend un accumulateur haute-pression d'un fluide à haute-pression, un premier accumulateur basse-pression du fluide à basse-pression et un second accumulateur basse-pression du fluide à basse-pression. Le fluide est constitué d'un liquide, tel que de l'huile. Les réservoirs sont montés en parallèle les uns aux autres. Ledit dispositif comprend également une pompe-moteur hydraulique qui est en relation avec un train de roues du véhicule automobile. La pompe-moteur hydraulique est apte à pomper le fluide à partir du premier accumulateur basse-pression et du second accumulateur basse-pression vers l'accumulateur haute-pression lorsque la pompe-moteur hydraulique est entraînée en mode pompe. La pompe-moteur hydraulique est également apte à renvoyer le fluide vers les premier et second accumulateurs basse-pression lorsque la pompe-moteur hydraulique est utilisée en mode moteur. Lors d'une phase de freinage du véhicule automobile, une énergie hydraulique est stockée à l'intérieur des réservoirs, une telle énergie hydraulique étant par exemple réutilisée lors d'une phase d'accélération du véhicule automobile, en étant restituée au train de roues du véhicule automobile.

Le système de stockage d'énergie hydraulique du document EP 1,470,014 ne permet pas de résoudre les problèmes que rencontrent les systèmes hybrides actuels. En effet, il apparaît qu'il est nécessaire de disposer d'un air comprimé à très forte pression, de l'ordre de 20 bars par exemple, à l'intérieur du réservoir haute-pression pour générer un couple-moteur satisfaisant. En effet, l'air comprimé contenu à l'intérieur du réservoir haute-pression diminue en pression lors de phases d'utilisation de l'énergie pneumatique en provenance du réservoir haute-pression. Il est ensuite nécessaire d'attendre un remplissage total du réservoir haute-pression en air comprimé avant de pouvoir générer un couple-moteur efficace. Un tel temps d'attente compromet un intérêt des systèmes hybrides actuels, notamment dans le cas où le véhicule automobile ne réalise pas des étapes de roulage permettant une récupération satisfaisante d'énergie pneumatique. Une solution possible serait d'augmenter un volume du réservoir d'air. Cependant, dans la mesure où il est préféré que le réservoir d'air soit fixé à proximité du moteur thermique et sans liaison flexible, une telle augmentation de volume est pragmatiquement impossible.

Le but de la présente invention est de proposer un système hybride qui répond de manière satisfaisante aux inconvénients susvisés et qui permet de satisfaire une demande de couple-moteur importante, tout en ayant une réserve d'air comprimé à très forte pression, 20 bars notamment, qui est aisément utilisable et rechargeable.

Un système hybride de la présente invention est un système hybride destiné à équiper un véhicule automobile. Le système hybride comprend un système de stockage d'énergie pneumatique.

Selon la présente invention, le système de stockage d'énergie pneumatique comprend au moins un réservoir de démarrage et un réservoir principal.

Le réservoir de démarrage et le réservoir principal sont avantageusement montés en série l'un avec l'autre.

Le réservoir de démarrage est préférentiellement interposé entre le réservoir principal et un moteur thermique constitutif du système hybride.

Un système de régulation de pression est avantageusement interposé entre le réservoir de démarrage et le réservoir principal.

Selon une première variante de réalisation, le système de régulation de pression comprend une électrovanne munie d'un premier capteur de pression équipant le réservoir de démarrage et d'un deuxième capteur de pression équipant le réservoir principal.

Selon une deuxième variante de réalisation, le système de régulation de pression comprend un premier clapet anti-retour et un deuxième clapet qui sont disposés en parallèle l'un de l'autre.

Un procédé de mise en oeuvre d'un tel système hybride est principalement reconnaissable en ce que le procédé comprend :
- une première étape de fonctionnement dans laquelle le réservoir de démarrage et le réservoir principal sont successivement portés depuis une pression initiale à une pression maximale, puis
- une cinquième étape de fonctionnement dans laquelle le réservoir de démarrage, puis le réservoir principal, sont successivement portés depuis la pression maximale jusqu'à une pression-seuil.

Le procédé comprend préférentiellement une troisième étape de fonctionnement dans laquelle le réservoir de démarrage est porté depuis la pression maximale jusqu'à la pression-seuil, le réservoir principal étant maintenu à la pression maximale.

Le procédé comprend préférentiellement une quatrième étape de fonctionnement dans laquelle le réservoir de démarrage est porté depuis la pression-seuil jusqu'à la pression maximale, le réservoir principal étant maintenu à la pression maximale, la quatrième étape de fonctionnement succédant à la troisième étape de fonctionnement.

Préférentiellement, la cinquième étape de fonctionnement comprend :
- une troisième phase au cours de laquelle une première pression à l'intérieur du réservoir de démarrage décroit depuis la pression maximale jusqu'à la pression-seuil, une deuxième pression à l'intérieur du réservoir principal restant égale à la pression maximale, puis
- une quatrième phase au cours de laquelle un transfert de pression depuis le réservoir principal vers le réservoir de démarrage se produit, la deuxième pression décroissant jusqu'à la pression-seuil, la première pression étant constante et égale à la pression-seuil, et
- une cinquième phase au cours de laquelle la première pression et la deuxième pression évoluent de manière identique l'une à l'autre depuis la pression-seuil jusqu'à une pression minimale.

D'autres caractéristiques et avantages de la présente invention apparaîtront à la lecture de la description qui va en être faite d'exemples de réalisation, en relation avec les figures des planches annexées, dans lesquelles :
- La figure 1 est une vue schématique d'un système hybride de la présente invention.
- La figure 2 est une illustration d'une évolution en fonction du temps d'une pression d'air comprimé à l'intérieur de réservoirs d'air constitutifs du système hybride représenté sur la figure précédente, ainsi que d'une évolution en fonction du temps d'un couple-moteur délivré par le système hybride à un train de roues d'un véhicule automobile.
- Les figures 3 et 4 sont des illustrations schématiques de variantes respectives de réalisation d'un système de régulation de pression constitutif du système hybride représenté sur la figure 1.

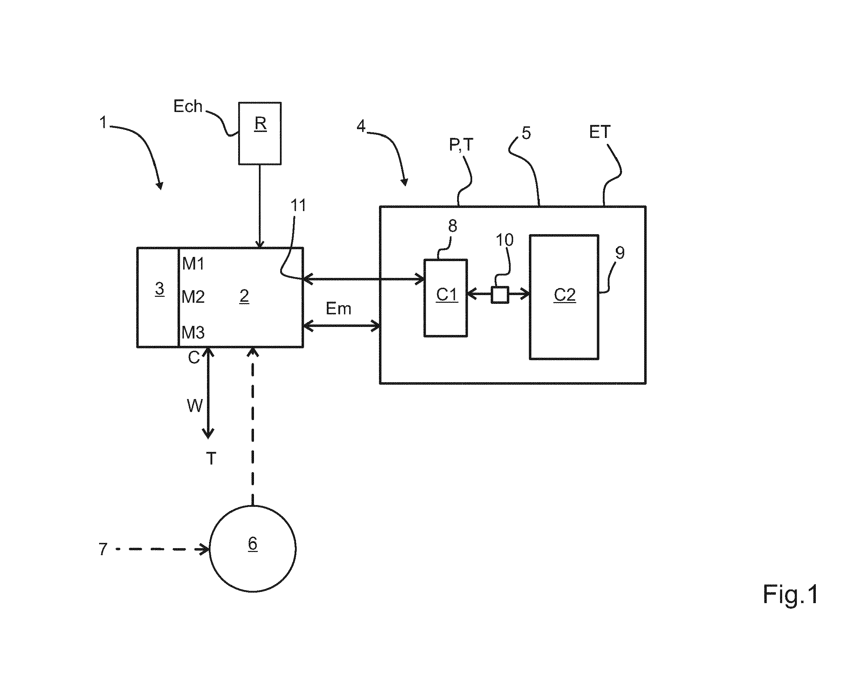

Sur la figure 1, un système hybride 1 de la présente invention équipe un véhicule automobile pour permettre un déplacement de ce dernier. Le système hybride 1 comprend un moteur thermique 2 qui est accouplé à une boîte de vitesse 3. Le moteur thermique 2 est un moteur à combustion interne qui consomme du carburant pour permettre le déplacement du véhicule automobile. Le système hybride 1 comprend également un système de stockage d'énergie pneumatique 4 qui comprend une réserve d'air 5 reliée au moteur thermique 2.

Le système hybride 1 est configuré pour pouvoir être mis en oeuvre selon au moins trois modes de fonctionnement, dont :

Un premier mode de fonctionnement M1, dit « thermique », dans lequel le système hybride 1 convertit une énergie chimique Ech du carburant contenu à l'intérieur d'un réservoir R en couple-moteur W qui est transmis à un train de roues T du véhicule automobile,

Un deuxième mode de fonctionnement M2, dit « pompe », dans lequel le système hybride 1 convertit une énergie mécanique Em, tel qu'un couple-moteur C ou un régime-moteur, en une énergie thermodynamique ET, telle qu'une augmentation d'une pression d'air P ou une augmentation d'une température d'air T, d'un air comprimé contenu à l'intérieur de la réserve d'air 5,

Un troisième mode de fonctionnement M3, dit « pneumatique, dans lequel le système hybride 1 convertit l'énergie thermodynamique ET en couple-moteur W, qui est transmis au train de roues T.

Le choix du mode M1,M2,M3 à activer parmi les modes M1,M2,M3 mentionnés ci-dessus est réalisé par un calculateur 6 qui analyse une demande de couple-moteur 7 effectuée par un utilisateur du véhicule automobile. Suivant la quantité d'énergie thermodynamique ET stockée à l'intérieur de la réserve d'air 5 et la demande de couple-moteur 7, le calculateur 6 détermine le mode M1,M2,M3 à activer et/ou opère un changement de mode M1,M2,M3.

Le couple-moteur W desservi en troisième mode de fonctionnement M3 est directement dépendant d'une valeur de la pression d'air P de l'air comprimé stocké à l'intérieur de la réserve d'air 5. Plus particulièrement, le couple-moteur W, qui est généré puis desservi, est une fonction croissante de la pression d'air P de l'air comprimé stocké à l'intérieur de la réserve d'air 5.

Selon la présente invention, la réserve d'air 5 comprend deux réservoirs d'air 8,9 placés en série l'un avec l'autre. Plus particulièrement, la réserve d'air 5 comprend un réservoir principal 8 qui est d'une première capacité C1 et un réservoir de démarrage 9 qui est d'une deuxième capacité C2, inférieure à la première capacité C1. Le réservoir principal 8 et le réservoir de démarrage 9 sont reliés l'un à l'autre par un système de régulation de pression 10. Autrement dit le réservoir de démarrage 9 est interposé entre le moteur thermique 2 et le système de régulation de pression 10. Autrement dit encore, le système de régulation de pression 10 est interposé entre le réservoir de démarrage 9 et le réservoir principal 8. Le réservoir de démarrage 9 est relié à une soupape 11 du moteur thermique 1, de manière à toujours disposer d'une pression d'air P satisfaisante à l'intérieur du réservoir de démarrage 9.

Le système de régulation de pression 10 est destiné à maintenir une pression d'air P qui est satisfaisante à l'intérieur du réservoir de démarrage 9, notamment en puisant de l'air à l'intérieur du réservoir principal 8, lors d'un fonctionnement du moteur thermique 1 selon le troisième mode M3. Le système de régulation de pression 10 est également destiné à récupérer un surplus de pression d'air P de l'air comprimé en provenance du réservoir principal 8, lors d'un fonctionnement selon le deuxième mode M2.

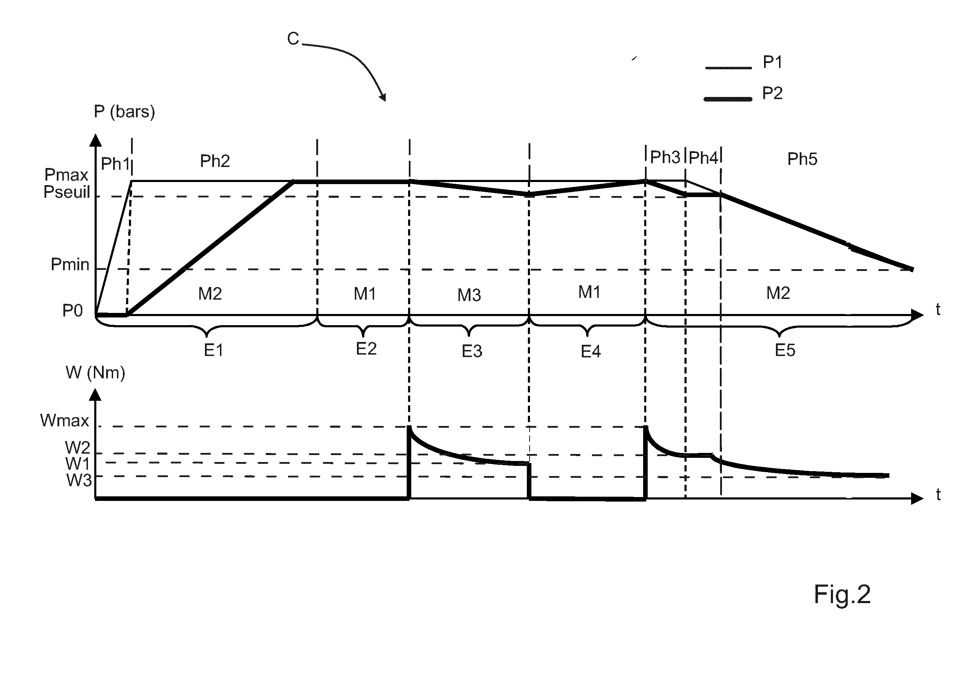

Sur la figure 2, est représenté un schéma d'évolution d'une première pression P1 d'air contenu à l'intérieur du réservoir de démarrage 9 et d'une deuxième pression P2 d'air contenu à l'intérieur du réservoir principal 8 ainsi qu'un schéma d'évolution du couple-moteur W au cours d'un cycle de fonctionnement C du système hybride 1.

Le cycle C de fonctionnement du système hybride 1 comprend successivement :
- Une première étape de fonctionnement E1 selon le deuxième mode de fonctionnement M2, puis
- Une deuxième étape de fonctionnement E2 selon le premier mode de fonctionnement M1, puis
- Une troisième étape de fonctionnement E3 selon le troisième mode de fonctionnement M3, puis
- Une quatrième étape de fonctionnement E4 selon le premier mode de fonctionnement M1, puis
- Une cinquième étape de fonctionnement E5 selon le deuxième mode de fonctionnement M2.

La première étape de fonctionnement E1 comprend une première phase Ph1 et une deuxième phase Ph2 qui est consécutive à la première phase Ph1.

Au cours de la première phase Ph1, le réservoir de démarrage 8 se remplit d'air comprimé de telle sorte que la première pression P1 à l'intérieur de ce dernier évolue depuis une pression initiale P0, de l'ordre de 1 bar, jusqu'à une pression maximale Pmax, par exemple de l'ordre de 20 bars. Le réservoir principal 9 quant à lui contient de l'air comprimé à la pression initiale P0. Autrement dit au cours de la première phase Ph1, le réservoir de démarrage 8 est rempli d'air comprimé jusqu'à atteindre la pression maximale Pmax tandis que le réservoir principal 9 est laissé à la pression initiale P0, qui est notoirement équivalente à la pression atmosphérique.

Au cours de la deuxième phase Ph2, le réservoir de démarrage 8 est maintenu à la pression maximale Pmax, tandis que le réservoir principal 9 se remplit d'air comprimé de telle sorte que la deuxième pression P2 à l'intérieur de ce dernier évolue depuis la pression initiale P0 jusqu'à la pression maximale Pmax. La deuxième phase Ph2 constitue donc une phase de remplissage du réservoir principal 9 à la pression Pmax.

Au cours de la première étape de fonctionnement E1, le couple-moteur W desservi par le système de stockage d'énergie pneumatique 4 au train de roues T est nul. Autrement dit, le véhicule automobile se déplace uniquement grâce au moteur thermique 2. Il en résulte que la première étape de fonctionnement E1 constitue une étape de récupération d'énergie pour le système de stockage d'énergie pneumatique 4.

Au cours de la deuxième étape de fonctionnement E2, le réservoir de démarrage 8 et le réservoir principal 9 sont maintenus l'un et l'autre à la pression maximale Pmax. Au cours de la deuxième étape de fonctionnement E2, le couple-moteur W généré par le système de stockage d'énergie pneumatique 4 est nul. Autrement dit, le véhicule automobile se déplace uniquement grâce au moteur thermique 2. Il en résulte que la deuxième étape de fonctionnement E2 constitue une étape de maintien en pression pour le système de stockage d'énergie pneumatique 4, plus particulièrement pour le réservoir de démarrage 8 et le réservoir principal 9.

Au cours de la troisième étape de fonctionnement E3, la première pression P1 à l'intérieur du réservoir de démarrage 8 décroit depuis la pression maximale Pmax jusqu'à une pression-seuil Pseuil, par exemple de l'ordre de 15 bars. La pression-seuil est comprise entre la pression maximale Pmax et la pression initiale P0. La demande de couple-moteur 7 étant peu importante et/ou de courte durée. Dans cet exemple, la pression P1 reste donc supérieure ou égale à la pression-seuil Pseuil au cours de la troisième étape de fonctionnement E3. La deuxième pression P2 reste égale à la pression maximale Pmax. Autrement dit, seul le réservoir de démarrage 8 est sollicité pour fournir un couple-moteur W au train de roues, le réservoir principal 9 étant maintenu à pression constante. Au cours de la troisième étape de fonctionnement E3, le couple-moteur W généré par le système de stockage d'énergie pneumatique 4 est non-nul. Plus précisément, le couple-moteur W évolue d'un couple-moteur maximal Wmax à un premier couple-moteur W1. Il en résulte que la troisième étape de fonctionnement E3 constitue une étape de fonctionnement en moteur pneumatique pour le véhicule automobile qui sollicite uniquement le réservoir de démarrage 8. La première capacité C1 de ce dernier étant inférieure à celle du réservoir principal 9, le réservoir de démarrage 8 est rapidement rempli à nouveau au cours de l'étape suivante.

Au cours de la quatrième étape de fonctionnement E4, le réservoir de démarrage 8 est rempli à nouveau d'air comprimé de telle sorte que la première pression P1 évolue depuis la pression-seuil Pseuil jusqu'à la pression maximale Pmax. Le réservoir principal 9 est maintenu à la pression maximale Pmax. Au cours de la quatrième étape de fonctionnement E4, le couple-moteur W généré par le système de stockage d'énergie pneumatique 4 est nul. Il en résulte que la quatrième étape de fonctionnement E4 constitue une étape de récupération d'énergie pour le système de stockage d'énergie pneumatique 4, plus particulièrement pour le réservoir de démarrage 8.

La cinquième étape de fonctionnement E5 comprend une troisième phase Ph3, une quatrième phase Ph4 qui est consécutive à la troisième phase Ph3 et une cinquième phase Ph5 qui est consécutive à la quatrième phase Ph4.

Au cours de la troisième phase Ph3, la première pression P1 à l'intérieur du réservoir de démarrage 8 décroit depuis la pression maximale Pmax jusqu'à la pression-seuil Pseuil. La deuxième pression P2 reste égale à la pression maximale Pmax. Au cours de la troisième phase Ph3, le couple-moteur W généré par le système de stockage d'énergie pneumatique 4 est non-nul. Le couple-moteur W évolue d'un couple-moteur maximal Wmax à un deuxième couple-moteur W2, qui est compris entre le couple-moteur maximal Wmax et le premier couple-moteur W1. La demande de couple-moteur 7 étant importante et/ou de longue durée, la pression P1 continue à baisser et devient inférieure à la pression-seuil Pseuil au cours de la quatrième phase Ph4.

Au cours de la quatrième phase Ph4, un transfert de pression depuis le réservoir principal 9 vers le réservoir de démarrage 8 se produit, de telle sorte que la deuxième pression P2 décroit jusqu'à la pression-seuil Pseuil, la première pression P1 étant constante et égale à la pression-seuil Pseuil. Au cours de la quatrième phase Ph4, le couple-moteur W desservi reste sensiblement égal au deuxième couple-moteur W2.

Au cours de la cinquième phase Ph5, la première pression P1 et la deuxième pression P2 évoluent de manière identique l'une à l'autre depuis la pression-seuil Pseuil jusqu'à une pression minimale Pmin. La pression minimale Pmin est comprise entre la pression-seuil Pseuil et la pression initiale P0. Au cours de la cinquième phase Ph5, le couple-moteur W desservi décroit du deuxième couple-moteur W2 à un troisième couple-moteur W3, ce dernier étant éventuellement nul dans le cas où la pression minimale Pmin est égale à la pression initiale P0.

Il en résulte que la cinquième étape de fonctionnement E5 constitue une étape de fonctionnement en moteur pneumatique pour le véhicule automobile qui sollicite avantageusement le réservoir de démarrage 8 puis le réservoir principal 9.

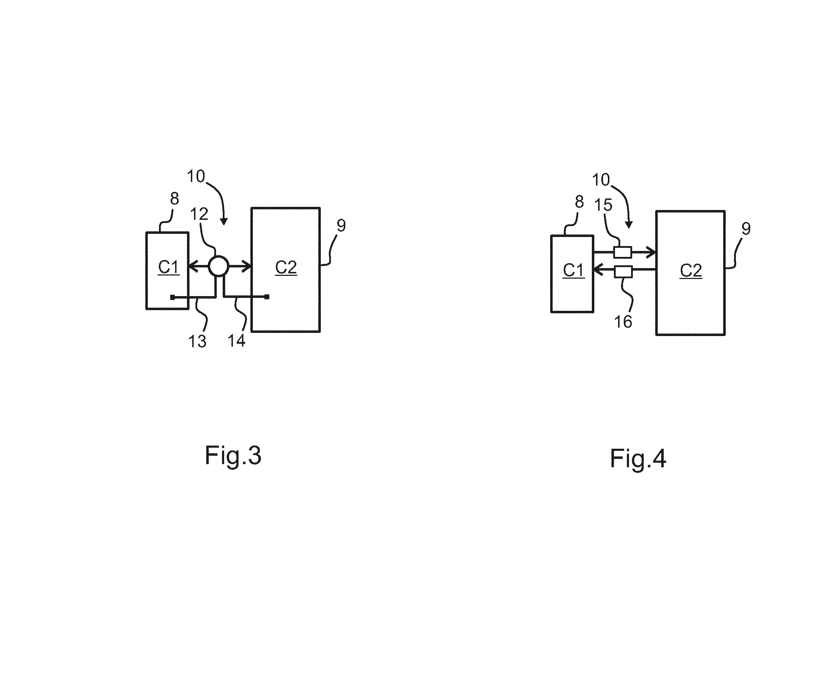

Selon une première variante de réalisation du système de régulation de pression 10 illustrée sur la figure 3, qui est un système de régulation actif de pression, ce dernier comprend une électrovanne 12 associée à un premier capteur de pression 13 équipant le réservoir de démarrage 8 et un deuxième capteur de pression 14 équipant le réservoir principal 9. L'électrovanne 12 est placée en position d'ouverture autorisant un passage d'air entre le réservoir de démarrage 8 et le réservoir principal 9 si et seulement si la première pression P1 est supérieure à la pression maximale Pmax ou bien la deuxième pression P2 est supérieure à la première pression P1.

La deuxième variante de réalisation du système de régulation de pression 10 illustrée sur la figure 4 est de type système passif réalisé par ddes moyens mécaniques comprenant un premier clapet anti-retour 16 qui s'ouvre si la première pression P1 est différente de la deuxième pression P2 et un deuxième clapet 15 qui s'ouvre si la première pression est distincte de la pression maximale Pmax.

Le premier clapet anti-retour 15 et le deuxième clapet 16 sont montés en parallèle l'un par rapport l'autre entre le réservoir de démarrage 8 et le réservoir principal 9.

Le clapet anti-retour 15 empêche la circulation de fluide du réservoir de démarrage vers le réservoir principal. Il autorise la circulation de fluide du réservoir principal vers le réservoir de démarrage lorsque la différence de pression entre les deux réservoirs dépasse un premier seuil. L'autre clapet 15 autorise la circulation de fluide du réservoir de démarrage vers le réservoir principal lorsque la différence de pression entre le réservoir de démarrage et la pression atmosphérique dépasse un deuxième seuil.

Ces dispositions sont telles qu'un tel système hybride 1 offre une réponse satisfaisante, y compris en cas d'une demande de couple-moteur 7 importante.

## Revendications

1. Système hybride (1) destiné à équiper un véhicule automobile, le système hybride (1) comprenant un système de stockage d'énergie pneumatique (4), **caractérisé en ce que** le système de stockage d'énergie pneumatique (4) comprend au moins un réservoir de démarrage (8) et un réservoir principal (9).

2. Système hybride (1) selon la revendication précédente, **caractérisé en ce que** le réservoir de démarrage (8) et le réservoir principal (9) sont montés en série l'un avec l'autre.

3. Système hybride (1) selon la revendication 2, **caractérisé en ce que** le réservoir de démarrage (8) est interposé entre le réservoir principal (9) et un moteur thermique (2) constitutif du système hybride (1).

4. Système hybride (1) selon l'une quelconque des revendications précédentes, **caractérisé en ce qu**'un système de régulation de pression (10) est interposé entre le réservoir de démarrage (8) et le réservoir principal (9).

5. Système hybride (1) selon la revendication 4, **caractérisé en ce que** le système de régulation de pression (10) comprend une électrovanne (12) munie d'un premier capteur de pression (13) équipant le réservoir de démarrage (8) et d'un deuxième capteur de pression (14) équipant le réservoir principal (9).

6. Système hybride (1) selon la revendication 4, **caractérisé en ce que** le système de régulation de pression (10) comprend un premier clapet anti-retour (15) et un deuxième clapet (16) qui sont disposés en parallèle l'un de l'autre.

7. Système hybride (1) selon la revendication précédente, **caractérisé en ce que** le premier clapet anti-retour (15) autorise la circulation de fluide du réservoir principal vers le réservoir de démarrage lorsque la différence de pression entre les deux réservoirs dépasse un premier seuil.

8. Système hybride (1) selon la revendication 6 ou 7, **caractérisé en ce que** le deuxième clapet 15 autorise la circulation de fluide du réservoir de démarrage vers le réservoir principal lorsque la différence de pression entre le réservoir de démarrage et la pression atmosphérique dépasse un deuxième seuil.

9. Procédé de mise en oeuvre d'un système hybride (1) selon l'une quelconque des revendications précédentes, **caractérisé en ce que** le procédé comprend :
- une première étape de fonctionnement (E1) dans laquelle le réservoir de démarrage (8) et le réservoir principal (9) sont successivement portés depuis une pression initiale (P0) à une pression maximale (Pmax), puis
- une cinquième étape de fonctionnement (E5) dans laquelle le réservoir de démarrage (8), puis le réservoir principal (9), sont successivement portés depuis la pression maximale (Pmax) jusqu'à une pression-seuil (Pseuil).

10. Procédé selon la revendication précédente, **caractérisé en ce que** le procédé comprend une troisième étape de fonctionnement (E3) dans laquelle le réservoir de démarrage (8) est porté depuis la pression maximale (Pmax) jusqu'à la pression-seuil (Pseuil), le réservoir principal (9) étant maintenu à la pression maximale (Pmax).

11. Procédé selon la revendication précédente, **caractérisé en ce que** le procédé comprend une quatrième étape de fonctionnement (E4) dans laquelle le réservoir de démarrage (8) est porté depuis la pression-seuil (Pseuil) jusqu'à la pression maximale (Pmax), le réservoir principal (9) étant maintenu à la pression maximale (Pmax), la quatrième étape de fonctionnement (E4) succédant à la troisième étape de fonctionnement (E3).

12. Procédé selon l'une quelconque des revendications 9 à 11, **caractérisé en ce que** la cinquième étape de fonctionnement (E5) comprend :
- une troisième phase (Ph3) au cours de laquelle une première pression (P1) à l'intérieur du réservoir de démarrage (8) décroit depuis la pression maximale (Pmax) jusqu'à la pression-seuil (Pseuil), une deuxième pression (P2) à l'intérieur du réservoir principal restant égale à la pression maximale (Pmax), puis
- une quatrième phase (Ph4) au cours de laquelle un transfert de pression depuis le réservoir principal (9) vers le réservoir de démarrage (8) se produit, la deuxième pression (P2) décroissant jusqu'à la pression-seuil (Pseuil), la première pression (P1) étant constante et égale à la pression-seuil (Pseuil), et
- une cinquième phase (Ph5) dans laquelle la première pression (P1) et la deuxième pression (P2) évoluent de manière identique l'une à l'autre depuis la pression-seuil (Pseuil) jusqu'à une pression minimale (Pmin).
